Europäisches Patentamt

European Patent Office

Office européen des brevets

(11) Veröffentlichungsnummer: **0 173 087**
**B1**

(12) **EUROPÄISCHE PATENTSCHRIFT**

(45) Veröffentlichungstag der Patentschrift:
**24.05.89**

(51) Int. Cl.⁴: **G 01 S 17/10**

(21) Anmeldenummer: **85109440.9**

(22) Anmeldetag: **26.07.85**

(54) **Vorrichtung zur Messung der Laufzeit von elektromagnetischen Wellen.**

(30) Priorität: **07.08.84 DE 3429062**

(43) Veröffentlichungstag der Anmeldung:
**05.03.86 Patentblatt 86/10**

(45) Bekanntmachung des Hinweises auf die Patenterteilung:
**24.05.89 Patentblatt 89/21**

(84) Benannte Vertragsstaaten:
**BE CH DE FR GB LI NL SE**

(56) Entgegenhaltungen:
**EP-A- 0 015 566
DE-A- 2 023 383
US-A- 3 303 498
US-A- 3 503 680**

**UND-ODER-NOR + STEUERUNGSTECHNIK, Nr. 10,
1982, Seiten 32-34, Mainz**

(73) Patentinhaber: **Erwin Sick GmbH Optik-Elektronik,
Sebastian-Kneipp-Strasse 1, D-7808 Waldkirch (DE)**

(72) Erfinder: **Hug, Gottfried, Am Wegle 1.
D-7808 Waldkirch-Siensbach (DE)**

(74) Vertreter: **Dipl.-Phys.Dr. Manitz Dipl.-Ing., Dipl.-Wirtsch.
Finsterwald Dipl.-Ing. Grämkow Dipl.-Chem.Dr. Heyn
Dipl.-Phys. Rotermund, Morgan, B.Sc.(Phys.)
Robert-Koch-Strasse 1, D-8000 München 22 (DE)**

## Beschreibung

Die Erfindung betrifft eine Vorrichtung zur Messung der Laufzeit von elektromagnetischen Wellen, insbesondere Lichtwellen, über eine Messstrecke vorbestimmter Länge mit einem durch einen elektrischen Impulsgenerator angesteuerten Sender, welcher die elektrische Welle in Form von Wellenimpulsen über die Messstrecke schickt und mit einem am Ende der Messstrecke vorgesehenen Messempfänger, der die Wellenimpulse aufnimmt und in einen elektrischen Empfangsimpuls umwandelt, sowie mit einer elektronischen Auswerteschaltung zur Bestimmung der Impulslaufzeit. Aus der Laufzeit kann bei bekannter Lichtgeschwindigkeit auch die von der Welle durchlaufende Strecke bestimmt werden, oder bei bekannter Strecke die Lichtausbreitungsgeschwindigkeit des Mediums bestimmt werden.

Vorrichtungen zur Messung der Laufzeit von elektromagnetischen Wellen, insbesondere Lichtwellen, sind in zahlreichen Varianten bekannt.

Mittels der Laser-Interferenzmessung lässt sich zwar eine sehr hohe Genauigkeit bei der Laufzeitmessung erzielen, doch steht dem ein erheblicher baulicher Aufwand gegenüber, wodurch derartige Vorrichtungen sehr teuer sind. Ein weiterer Nachteil besteht in dem unhandlichen Aufbau, den kleinen Messstrecken und der nur differentiellen Aussage. Es ist also keine Bestimmung des Absolutwertes der Laufzeit möglich.

Andere Laufzeitmessungen durch Bestimmung der Phasenbeziehung zwischen Sende- und Empfangssignalen werden vorwiegend bei grossen Messstrecken verwendet. Der Messbereich ist gegen Null stark eingeschränkt.

Das Ziel der vorliegenden Erfindung besteht darin, eine Vorrichtung der eingangs genannten Gattung zu schaffen, welche einen nach unten uneingeschränkten Messbereich bis zum Abstand Null aufweist, eine gute Genauigkeit besitzt, einen sehr kompakten Aufbau gestattet, keine besonderen Anforderungen an die Optik stellt und wirtschaftlich herstellbar ist.

Zur Lösung dieser Aufgabe sieht die Erfindung vor, dass der durch Impulse triggerbare Impulsgenerator in einer zwischen seinem Ausgang und seinem Triggereingang verlaufenden Rückkopplungsschleife angeordnet ist, in welche im Gegentakt entweder die Messstrecke oder eine am Ende einen Referenzempfänger aufweisende Referenzstrecke während eines Messzeitraumes bzw. eines Referenzzeitraumes, die beide gross gegenüber der Impulsperiode sind, einbeziehbar ist, und ausserdem eine Rechen-Zählstufe beaufschlagt, die aus der Länge des Mess- bzw. Referenzzeitraumes und der Zahl der währenddessen abgegebenen Impulse die Laufzeit errechnet.

Die physikalische Grundlage für das erfindungsgemässe Messverfahren bildet also die Beziehung zwischen der Messstrecke, dem dort befindlichen Medium, der Lichtgeschwindigkeit und der Zeit. Danach ergeben sich bei einer Sender-Empfänger-Anordnung nach dem Reflexionsprinzip für 1 mm Messstrecke Laufzeiten von 6 psec. Zeiten dieser Grössenordnung lassen sich mit einer einzigen Messung nur durch erheblichen messtechnischen Aufwand bestimmen. Durch das erfindungsgemässe Messverfahren wird dies vermieden. Hierzu wird eine bekannte Anordnung von Photoempfänger und modulierbarem Sender verwendet. An die Optik dieser Anordnung werden keine besonderen Anforderungen gestellt. Die verwendete Vorrichtung beinhaltet ein elektronisches Schaltungskonzept, das mit konventionellen, billigen Bauteilen eine exakte Auswertung des Informationsflusses zwischen optischem Sender und optischem Empfänger ermöglicht.

Erfindungsgemäss wird die beim Durchlaufen eines Impulses entlang der Messstrecke gewonnene Lauftzeitinformation in an sich bekannter Weise durch Wiederholung akkumuliert. Auf US-A 3503680 wird hingewiesen. Hierzu ordnet man den Impulsgenerator mit dem Sender und dem Messempfänger so an, dass das Empfangssignal dem Impulsgenerator als Triggersignal wieder zugeführt wird, so dass eine mit einer vorbestimmten zeitlichen Verzögerung versehene Rückkopplungsschleife vorliegt. Dies ist auch an sich bekannt, siehe DE-A 2023383.

Erfindungsgemäss werden in einer derartigen Rückkopplungsschleife alle Laufzeiten von zahlreichen Schleifenzyklen miteinander verkettet. Untersucht man das Zeitverhalten von einer Vielzahl von Schleifenzyklen, so findet man darin die mit der Zahl durchlaufender Schleifenzyklen multiplizierte Basisdurchlaufzeit der Rückkopplungsschleife plus den ebenfalls mit der Anzahl von Schleifenzyklen multiplizierten Laufzeitanteil der Messstrecke. Führt man nun alternierend eine Akkumulation mit kurzgeschlossener Messstrecke bzw. Einschaltung einer bekannten Referenzstrecke und eine Akkumulation mit in die Rückkopplungsschleife eingefügter Messstrecke durch, so kann man aus den aufaddierten Impulsen die Laufzeit ermitteln, da die Basislaufzeit und die Drift der Rückkopplungsschleife (aller Sender- und Empfangskomponenten) eliminiert werden. Man erhält unmittelbar die mit der Zahl von Schleifenzyklen multiplizierte Laufzeit über die Messstrecke. Wählt man die Zahl von während eines Messzyklus durchlaufenden Schlaufenzyklen gross, so kann man die Genauigkeit der Laufzeitmessung praktisch beliebig steigern, was mit preiswerten Digitalbausteinen realisiert werden kann. Die einzige Voraussetzung ist, dass sich während eines Messzyklus auf der Messstrecke nichts verändert.

Eine besonders einfache Auswertung wird dadurch gewährleistet, dass die Rechen-Zählstufe zwei während des Messzeitraumes bzw. des Referenzzeitraumes an den Ausgang des Impulsgenerators anschliessbare Zähler aufweist, an die Dividierstufen anschliessen, und dass die Dividierstufen an eine Differenzbildungsstufe angeschlossen sind, die ein für die Laufzeit repräsentatives Signal liefert.

Eine praktische Realisierung der Erfindung kennzeichnet sich dadurch, dass der Messempfänger und der Referenzempfänger durch von einer Zeitsteuerschaltung im Gegentakt für jeweils den Messzeitraum bzw. den Referenzzeitraum schliessbare Schalter wahlweise in die Rückkopplungsschleife einschaltbar sind.

Weiter kann vorgesehen sein, dass die Zähler durch von der Zeitsteuerschaltung im Gegentakt für jeweils den Messzeitraum bzw. den Referenzzeitraum schliessbare Schalter wahlweise an den Ausgang des Impulsgenerators anschliessbar sind.

Eine vorteilhafte Weiterbildung der Erfindung kennzeichnet sich dadurch, dass der Impulsgenerator aus einem Impulspausengeber und einem Sendeimpulsgeber besteht, welche vorzugsweise hintereinandergeschaltet sind, wobei der Impulspausengeber von einem Eingangsimpuls triggerbar ist und der Sendeimpulsgeber am Ende der vom Impulspausengeber gegebenen Impulspause ausgelöst wird.

Eine besonders genaue Auswertung wird erzielt, wenn zwischen den Impulsgenerator und den Sender ein Sendeimpulsformer geschaltet ist, der einen Impuls mit deutlicher Spitze bildet.

Für eine vorteilhafte Signalauswertung ist es zweckmässig, wenn die beiden an den Messempfänger bzw. Referenzempfänger angeschlossenen Schalter gemeinsam an einen Verstärker angelegt sind, der zum Impulsgenerator führt.

Im praktischen Einsatz ergeben sich vom Tastobjekt unterschiedliche Amplitudenverhältnisse, um dem Rechnung zu tragen, sieht eine Weiterbildung der Erfindung vor, dass dem Verstärker ein Amplitudenregler folgt. Am Amplitudenregler kann die Information über Amplitudengrösse ausgekoppelt werden und für eine weitere Verwendung zur Verfügung stehen.

Eine besonders wichtige Weiterbildung der Erfindung kennzeichnet sich dadurch, dass in den Zweig zwischen den beiden an den Messempfänger bzw. den Referenzempfänger angeschlossenen Schaltern und den Eingang des Impulsgenerators eine Differenzierstufe eingeschaltet ist. Dabei soll an die Differenzierstufe ein Nulldurchgangskomparator angeschlossen sein. Durch diese Massnahme wird der Zeitpunkt des Schaltens am Nulldurchgangskomparator präzisiert. Man schaltet durch die Differenzierung denjenigen Fehler aus, der durch die Differenz und Drift der Integrationszeit an den zweckmässigerweise als Mess- bzw. Referenzphotoempfänger verwendeten PIN-Photodioden entstehen könnte.

An die Signalverzögerungszeiten der PIN-Photodioden und der Verstärker müssen also keine aussergewöhnlichen Anforderungen gestellt werden, was den Einsatz preiswerter Teile ermöglicht.

Eine weitere vorteilhafte Ausführungsform ist so ausgebildet, dass in den Zweig zwischen den beiden an den Messempfänger bzw. den Referenzempfänger angeschlossenen Schaltern und den Eingang des Impulsgenerators ein normalerweise geschlossenes Tor eingeschaltet ist, welches von einer Torsteuerschaltung beim Erscheinen der Endflanke, entspricht Impulsspitze des Impulsformers, jedes Sendeimpulses am Ausgang des Impulsgenerators geöffnet und beim Erscheinen eines Empfangsimpulses am Ausgang des Tores wieder schliesst, wozu der Setzeingang der Torsteuerschaltung an den Ausgang des Impulsgenerators und der Rücksetzeingang an den Ausgang des Tores angeschlossen ist.

Durch das Öffnen des Tores während des Sendeimpulses und Schliessen desselben durch den Empfangsimpuls wird erreicht, dass nur der für die Auswertung relevante Zeitbereich auf den nachfolgenden Schaltungsteil Einfluss hat. Etwaige zwischen den Impulsen auftretende Störungen werden somit wirksam eliminiert.

Bevorzugt ist unmittelbar vor dem Impulsgenerator in die Rückkopplungsschleife ein ODER-Gatter eingeschaltet, dessen zweiter Eingang zum Empfang eines Start-Stopp-Signales an die Zeitsteuerschaltung angeschlossen ist. Über das ODER-Gatter wird das Signal dem Impulsgenerator zugeführt, welches zum Auslösen und Anhalten der Messung benötigt wird.

Der oben erwähnte Impulspausengeber sorgt für die nötige Erholphase der analogen Komponenten und triggert den Sendeimpulsgeber an. Von beiden Zeitstufen wird keine Langzeitstabilität gefordert, da sie innerhalb des gemeinsamen Signalpfades liegen und ein Driften durch Autokompensation keine Wirkung zeigt.

Es ist angebracht, Zeitstufen mit kleinem Jitterrauschen zu verwenden, da hierdurch ein statistischer Einfluss auf die Messgenauigkeit erfolgt.

Der Sendeimpulsgeber ist unmittelbar an die Rückkopplungsschleife angeschlossen und sorgt für die richtige anstiegs- und Abfallzeit des Sendeimpulses, welcher schräg ansteigende und schräg abfallende Flanken aufweisen soll.

Die Zeitsteuerschaltung bestimmt auch die Schliesszeiten der Schalter und damit die Anzahl von Umläufen der Impulse in der Rückkopplungsschleife während eines Mess- und eines Referenzzyklus. Die Zeitsteuerschaltung steuert sämtliche Schalter und bestimmt auch den Beginn und das Ende einer Messung. Sie schliesst den jeweiligen Mess- oder Referenzzyklus durch Unterbrechen der Rückkopplungsschleife ab.

Der wesentliche Vorteil der Erfindung besteht darin, dass durch die grosse Zahl verketteter Zyklen die Zeitdifferenz zwischen Mess- und Referenzzyklus proportional der Zahl der Impulsumläufe wächst. Hierdurch können Laufzeiten vom psec-Bereich in den μsec-Bereich transformiert werden. Für diesen stehen preiswerte Bauteile zur Auswertung zur Verfügung.

Die Erfindung wird im folgenden beispielsweise anhand der Zeichnung beschrieben, in dieser zeigt:

Fig. 1 ein Blockschaltbild einer erfindungsgemässen Vorrichtung zur Messung der Laufzeit von elektromagnetischen Wellen, insbesondere Licht, und

Fig. 2 eine Abwandlung des Eingangsteils der in Fig. 1 dargestellten Vorrichtung mit mechanisch-optischer Umschaltung vom Mess- auf den Referenzstrahlengang.

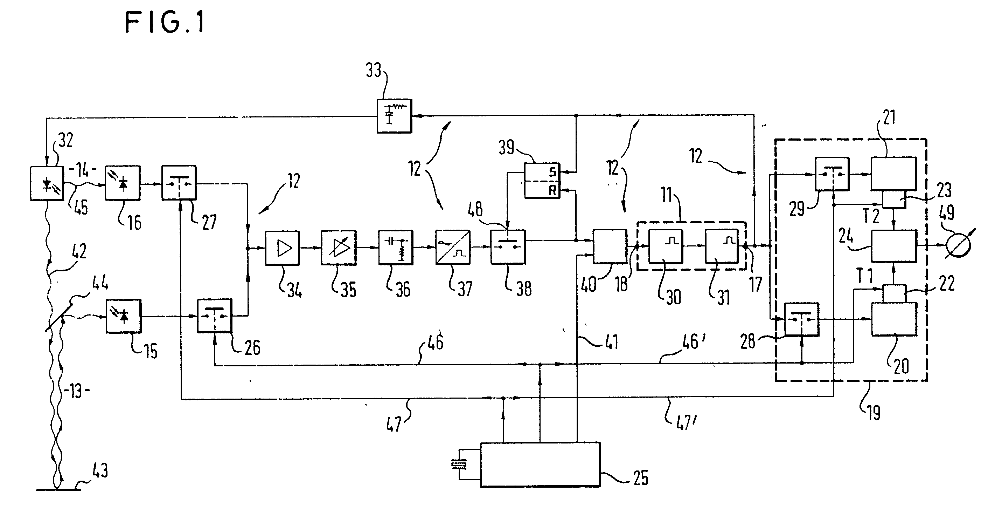

Nach Fig. 1 ist eine zentrale Zeitsteuerschaltung 25 über eine erste Steuerleitung 41 an ein ODER-Gatter 40 angeschlossen, dessen Ausgang am Triggereingang 18 eines Impulsgenerators 11 anliegt, der aus einem Impulspausengeber 30 und einem an diesen angeschlossenen Sendeimpulsgeber 31 besteht. Durch ein Startsignal in Form eines Einzelimpulses von der Zeitsteuerschaltung 25 wird im Impulspausengeber 30 ein eine Impulspause von z.B. 200 ns definierender Pausenimpuls ausgelöst, dessen schräg abfallende Endflanke im Sendeimpulsgeber 31 einen Sendeimpuls mit schräg ansteigender Anfangs- und schräg abfallender Endflanke auslöst, der z.B. eine Länge von 100 ns hat.

Der Ausgang 17 des Impulsgenerators 11 ist über einen Sendeimpulsformer 33 an einen Lichtsender 32 angelegt, der z.B. durch eine Sende-Diode gebildet ist. Der Sendeimpulsformer 33 besitzt einen integrierenden Charakter, um so ein Impulssignal mit einer definierten Spitze zu bilden.

Das vom Sender 32 ausgehende Licht wird einmal als Welle 42 zu einer Messstrecke 13 geschickt, an deren Ende z.B. ein reflektierendes Objekt 43 angeordnet ist. Am Beginn der Messstrecke 13 befindet sich ein Strahlenteiler 44, durch den das Sendelicht hindurchgeht und von dem das reflektierte Licht zu einem als PIN-Diode ausgebildeten Messempfänger 15 umgelenkt wird.

Ein weiterer Teil 45 des Sendelichts wird über eine möglichst kurz ausgebildete Referenzstrecke 14 zu einem als PIN-Diode ausgebildeten Referenzempfänger 16 geleitet.

Nach Möglichkeit sollte der Abstand zwischen dem Sender 32 und dem Referenzempfänger 16 genau so gross wie zwischen dem Sender 32 und dem Strahlenteiler 44 sein. Sofern dies nicht möglich ist, können unterschiedliche Grundabstände später bei der rechnerischen Auswertung berücksichtigt werden.

An den Mess- bzw. Referenzempfänger 15 bzw. 16 schliessen sich elektronische Schalter 26 bzw. 27 an, die über weitere Steuerleitungen 46, 47 von der Zeitsteuerschaltung 25 angesteuert werden.

Die Ausgänge der Schalter 26, 27 sind an dem Eingang eines Verstärkers 34 zusammengeführt, dem ein Amplitudenregler 35 folgt. An den Amplitudenregler 35 ist wiederum eine Differenzierstufe 36 angeschlossen, deren Ausgang mit einem Nulldurchgangskomparator 37 verbunden ist. Der Nulldurchgangskomparator 37 führt über ein Tor 38 zum zweiten Eingang des ODER-Gatters 40. Der Steuereingang 48 des Tores 38 ist von einer Torsteuerschaltung 39 beaufschlagt, dessen Setzeingang S mit dem Ausgang 17 des Impulsgenerators 11 und dessen Rücksetzeingang R mit dem Ausgang des Tores 38 verbunden ist.

Der Ausgang 17 des Impulsgenerators 1 liegt ausserdem an zwei weiteren elektronischen Schaltern 28 bzw. 29 an, die über Steuerleitungen 46' bzw. 47' in der gleichen Weise wie die elektronischen Schalter 26 bzw. 27 angesteuert werden.

An die Ausgänge der Schalter 28, 29 sind ein Messzähler 20 bzw. ein Referenzzähler 21 angelegt. Die aufaddierten Zählerstände werden an Dividierstufen 22, 23 angelegt, denen als weiteres Eingangssignal ein für den Messzeitraum T1 bzw. den Referenzzeitraum T2 repräsentatives Eingangssignal zugeführt wird. Die Ausgänge der Dividierstufen 22, 23 liegen an einer Differenzbildungsstufe 24 an, an deren Ausgang ein Anzeigegerät 49 angeschlossen ist, welches die Laufzeit der Lichtimpulse über die Messstrecke 13 zur Anzeige bringt.

Die Schalter 28, 29 sowie die daran angeschlossenen Bauelemente bilden zusammen eine Rechen-Zählstufe 19.

Die Wirkungsweise der beschriebenen Vorrichtung ist wie folgt:

Durch Einschalten der Zeitsteuerschaltung 25 wird der erste Sendeimpuls im Impulsgenerator 11 ausgelöst, der über den Ausgang 17 und den Sendeimpulsformer 33 zum Sender 32 gelangt und dort einen entsprechenden Lichtimpuls aussendet, der gleichzeitig über die Messstrecke 13 und die Referenzstrecke 14 gelangt.

Es sei angenommen, dass die Zeitsteuerschaltung 25 zunächst die Schalter 26 und 28 geschlossen hat und die beiden anderen Schalter 27, 29 geöffnet hält. Nunmehr gelangt das vom Messempfänger 15 empfangene Empfangsimpulssignal über den elektronischen Schalter 26, den Verstärker 34, den Amplitudenregler 35, die Differenzierstufe 36, den Nulldurchgangskomparator 37, das Tor 38, welches durch die Torsteuerschaltung 39 geöffnet wurde, und das ODER-Gatter 40 zum Triggereingang 18 des Impulsgenerators 11, wo entsprechend der durch die Rückkopplungsschleife 12 einschliesslich der Messstrecke 13 bedingten Zeitverzögerung ein zweiter Impuls ausgelöst wird, der nun denselben Weg nimmt.

Die Schalter 26, 28 werden während eines Messzeitraumes T1 geschlossen gehalten, dessen Länge einem Vielfachen der Impulsperiode entspricht. So können z.B. während eines Messzeitraumes T1 1000 oder gar $10^6$ Impulse durch die erfindungsgemäss vorgesehene Rückkopplungsschleife 12 umlaufen, bevor die Zeitsteuerschaltung 25 die Schalter 26, 28 öffnet und dazu im Gegentakt die Schalter 27, 29 schliesst.

Bis dahin hat der Messzähler 20 sämtliche während des Zeitraumes T1 erschienenen Impulse aufaddiert. Ein entsprechendes Zeitwertsignal T1 wird in der Dividierstufe 22 durch das dort angelegte Impulszählsignal dividiert, so dass am einen Eingang der Differenzbildungsstufe 24 ein für die Gesamtlaufzeit eines Impulses durch die Rückkopplungsschleife 12 repräsentatives Signal anliegt.

Nach dem Schliessen der Schalter 27, 29 und dem in Gegentakt erfolgenden Öffnen der Schalter 26, 28 gelangt das Licht vom Sender 32 über die Referenzstrecke 14 zum Referenzempfänger 16 und von dort über den geschlossenen Schalter 27 schliesslich wieder zum Triggereingang 18 des Impulsgenerators 11, wo erneut ein weiterer Impuls ausgelöst wird, jetzt aber nach einer etwas kürzeren Zeit, weil der Weg des Lichtes über die Referenzstrecke 14 kürzer ist.

Während eines Referenzzeitraumes T2, der vorzugsweise gleich dem Messzeitraum T1 ist, werden nun über den geschlossenen Schalter 29 im Referenzzähler 21 die im Referenzzeitraum T2 erscheinenden Referenzimpulse aufaddiert. Nach Ablauf des Messzeitraums T2 öffnen die Schalter 27, 29 wieder und die Zeit T2 wird durch den Endstand des Zählers 21 in der Dividierstufe 23 geteilt, so dass am Ausgang der Dividierstufe 23 ein für die Laufzeit der Impulse in der Rückkopplungsschleife 12 repräsentatives Signal gebildet wird. Diese Zeit ist wegen der kürzeren Referenzstrecke 14 kleiner als die während des über die Messstrecke laufenden Zyklus gemessene Zeit. Der Subtrahierer 24 bildet dann am Anzeigegerät 49 ein Signal, welches die Laufzeit des Lichtes über die Messstrecke 13 anzeigt, weil die durch die Schaltung selbst und die Referenzstrecke 14 definierte Basiszeit von der Umlaufzeit der Impulse während eines Messzyklus abgezogen wird.

Es ist einerseits möglich, während einer vorgegebenen Zeit die auftretenden Impulse zu zählen, wobei diese Zeit z.B. eine Sekunde (Mess- bzw. Referenzzeitraum) betragen kann.

Es ist aber auch möglich, eine vorbestimmte Zahl von Impulsen zu zählen und die für deren Auflaufen erforderliche Zeit zu messen. In beiden Fällen wird praktisch über einen längeren Zeitraum die Impulsfrequenz gemessen und daraus die Laufzeit ermittelt.

Wenn $N_m$ die Zahl der beim Messzyklus gezählten Impulse, $N_r$ die Zahl der beim Referenzzyklus gemessenen Impulse und $T_o$ die jeweilige Messzeit ist, so errechnet sich die Laufzeit nach der folgenden Formel

$$t_L = T_o \cdot \left(\frac{1}{N_m} - \frac{1}{N_r}\right) \qquad (1)$$

Die Länge s der Messstrecke 13 errechnet sich wie folgt:

$$s = 0{,}5 \cdot v \cdot T_o \cdot \frac{N_r - N_m}{N_m \cdot N_r} \qquad (2)$$

oder

$$s = 0{,}5 \cdot v \cdot T_o \cdot \left(\frac{1}{N_m} - \frac{1}{N_r}\right) \qquad (3)$$

Die Auswertung nach den Formel (1) bis (3) erfolgt bei konstanter Messzeit $T_o$. v ist die Wellengeschwindigkeit auf der Mess- und Referenzstrecke.

Ist die Zahl N der beim Mess- und Referenzzyklus erscheinenden Impulse gleich und werden die Zeitdauern $T_{om}$ und $T_{or}$ des Mess- bzw. Referenzzyklus gemessen, so errechnet sich die Länge s der Messstrecke 13 wie folgt:

$$s = 0{,}5 \cdot v \cdot \frac{(T_{om} - T_{or})}{N} \qquad (4)$$

Der Term kann noch vereinfacht werden, da gilt:

$$\frac{0{,}5 \cdot v}{N} = k \text{ (Konstante)} \qquad (5)$$

Es ergibt sich so die Beziehung:

$$s = k \cdot (T_{om} - T_{or}) \qquad (6)$$

Die Erfindung kann auch zur Bestimmung der Wellengeschwindigkeit auf der Messstrecke 13 verwendet werden, wenn die Länge s der Messstrecke bekannt ist. Die Auswertung in einer Auswerteelektronik geschieht nach dem erstgenannten Verfahren wie folgt:

$$v = 2 \cdot s \cdot \frac{N_m \cdot N_r}{(N_r - N_m) \cdot T_o} \qquad (7)$$

Bei dem zweiten Verfahren wird v nach der folgenden Formel ermittelt:

$$v = 2 \cdot s \cdot \frac{N}{T_{om} - T_{or}} \qquad (8)$$

In jedem Fall müssen sich auf der Messstrecke 13 und der Referenzstrecke (14) die gleichen Medien befinden.

Die Länge einer Teilstrecke s' in einem bekannten Medium mit der Wellengeschwindigkeit $v_{med}$ und bekannter Gesamtstrecke s, wobei auf der Teilstrecke s–s' sich Luft befindet, errechnet sich nach dem ersten Verfahren wie folgt:

$$s' = 0{,}5 \cdot T_o \cdot \frac{\left[\left(\left(\frac{1}{N_m} - \frac{1}{N_r}\right) \cdot v_{Luft}\right) - s\right] \cdot v_{med}}{v_{Luft} - v_{med}} \qquad (9)$$

Nach dem zweiten Verfahren:

$$s' = 0{,}5 \frac{[((T_{om} - T_{or}) \cdot v_{Luft}) - s \cdot N] \cdot v_{med}}{N \cdot (v_{Luft} - v_{med})} \qquad (10)$$

Der Funktionsblock 19 in Fig. 1 hat also nur Symbolcharakter und kann in vielen anderen Ausführungen realisiert werden.

Das alternierende Aus- und Einblenden der Messstrecke 13 kann statt durch elektronische auch durch optische Schaltelemente bewirkt werden. Der Vorteil einer optischen Lösung ist der Wegfall von Parameter-Differenzen zweier

getrennter Empfangselemente als Mess- und Referenzempfänger. Elektronische Schaltelemente haben jedoch den Vorteil, dass auf einen optischen Zerhacker verzichtet werden kann.

Als optischer Sender wird erfindungsgemäss zweckmässig eine Halbleiterlumineszenzdiode verwendet. Die im Eingang angeordneten elektronischen Schalter sollen laufzeitneutrales Verhalten aufweisen. Da hier nicht die Schaltzeit, sondern das Signaldurchlaufverhalten eine Rolle spielt, lässt sich diese Forderung leicht mit Halbleiterdiodenschaltern erfüllen.

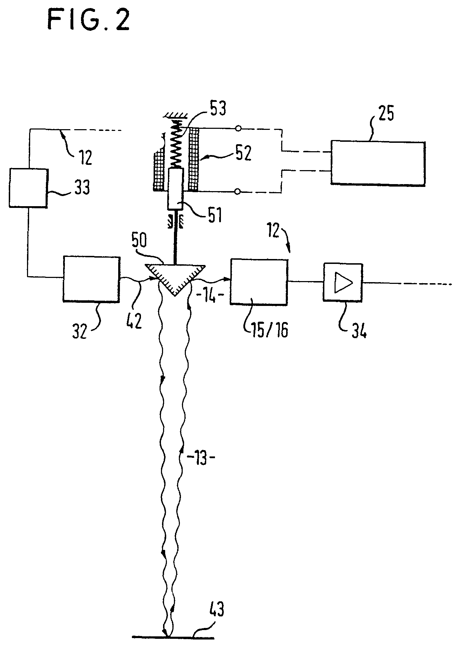

Figur 2 zeigt, wie das Umschalten von einer Referenzstrecke 14 auf eine Messstrecke 13 mit optischen Mitteln erfolgen kann. In diesem Fall ist nur ein einziger gemeinsamer Mess-Referenzempfänger 15, 16 in Form einer PIN-Diode vorgesehen, der an den Verstärker 34 gemäss Fig. 1 angeschlossen wird. Im geringen Abstand von ihm befindet sich der als Lumineszenzdiode ausgebildete Sender 32, welcher wie bei dem Ausführungsbeispiel nach Fig. 1 über den Sendeimpulsformer 33 von dem Impulsgenerator 11 beaufschlagt wird. Zwischen dem Sender 32 und dem Mess- und Referenzempfänger 15, 16 ist ein Dachkantprisma 50 mit spiegelnden Oberflächen angeordnet, welches den Sende-Lichtstrahl 42 um etwa 90° zu einem reflektierenden Objekt 43 umlenkt, von wo das Licht wieder zum Dachkantprisma 50 zurückreflektiert wird, welches das Empfangslicht erneut um 90° zum Mess-Referenzempfänger 15, 16 umlenkt.

Das Dachkantprisma 50 ist mit dem Anker 51 eines Elektromagneten 52 verbunden, der von der Zeitsteuerschaltung 25 synchron mit den nach wie vor vorhandenen Schaltern 28, 29 so angesteuert wird, dass beim Schliessen des Schalters 28 und dem Öffnen des Schalters 29 der Elektromagnet 52 stromlos ist und sein Anker durch eine Feder 53 in die äussere Stellung gedrückt wird, in der das am Anker 51 befindliche Dachkantprisma 50 sich gemäss Fig. 2 innerhalb des Referenzstrahlenganges 14 befindet.

Wird durch die Zeitsteuerschaltung der Schalter 28 geöffnet und der Referenzschalter 29 geschlossen, so wird gleichzeitig der Elektromagnet 52 erregt und der Anker 51 in das Innere der Spule des Elektromagneten 52 hineingezogen, was dazu führt, dass das Dachkantprisma 50 aus dem Referenzstrahlengang 14 herausgezogen wird und jetzt der Impulslichtstrahl 42 direkt vom Sender 32 zum Mess-Referenzempfänger 15, 16 gelangen kann.

Die Umschaltung der Rückkopplungsschleife 12 von der Referenzstrecke 14 auf die Messstrecke 13 und umgekehrt erfolgt also bei dem Ausführungsbeispiel nach Fig. 2 auf optisch-mechanischem Wege. Ebenso gut könnte die Umschaltung auch über eine geeignet ausgebildete Zerhackerscheibe erfolgen. Im übrigen sind die nicht dargestellten Schaltungsteile des Ausführungsbeispiels nach Fig. 2 ebenso, wie das in Fig. 1 gezeigt ist, aufgebaut und angeordnet.

Die erfindungsgemässe Vorrichtung kann auch zur Messung von durch elektromagnetische Wellen durchlaufenden Strecken verwendet werden, wobei insbesondere an das Durchlaufen sehr kleiner Strecken gedacht ist (z.B. Auflösung von 0,016 mm, d.h. eine Laufzeit von 0,055 ps). Die Erfindung eignet sich also besonders für die Messung bei relativ kurzen Strecken von einigen Millimetern bis einigen 10 m.

Patentansprüche

1. Vorrichtung zur Messung der Laufzeit von elektromagnetischen Wellen, insbesondere Lichtwellen, über eine Messstrecke vorbestimmter Länge mit einem durch einen elektrischen Impulsgenerator (11) angesteuerten Sender (32), welcher die elektrische Welle in Form von Wellenimpulsen über die Messstrecke schickt und mit einem am Ende der Messstrecke vorgesehenen Messempfänger (15), der die Wellenimpulse aufnimmt und in einen elektrischen Empfangsimpuls umwandelt, sowie mit einer elektronischen Rechen-Zählstufe zur Bestimmung der Impulslaufzeit, dadurch gekennzeichnet, dass eine zwischen dem Ausgang (17) und dem Triggereingang (18) des durch Impulse triggerbaren Impulsgenerators (11) verlaufende Rückkopplungsschleife (12) vorgesehen ist, in welche im Gegentakt entweder die Messstrecke (13) oder eine am Ende einen Referenzempfänger (16) aufweisende Referenzstrecke (14) während eines Messzeitraumes (T1) bzw. eines Referenzzeitraumes (T2), die beide gross gegenüber der Impulsperiode sind, einbeziehbar ist, und dass der Impulsgenerator ausserdem die Rechen-Zählstufe (19) beaufschlagt, die aus der Länge des Mess- bzw. Referenzzeitraumes und der Zahl der währenddessen abgegebenen Impulse die Laufzeit errechnet.

2. Vorrichtung nach Anspruch 1, dadurch gekennzeichnet, dass die Rechen-Zählstufe (19) zwei während des Messzeitraumes (T1) bzw. des Referenzzeitraumes (T2) an den Ausgang des Impulsgenerators (11) anschliessbare Zähler (20 bzw. 21) aufweist, an die Dividierstufen (22 bzw. 23) anschliessen, in denen nach Abschluss des Messzeitraumes (T1) bzw. des Referenzzeitraumes (T2) der Quotient aus dem Messzeitraum (T1) bzw. dem Referenzzeitraum (T2) und der Zahl der während dieser Zeiträume gezählten Impulse gebildet wird, und dass die Dividierstufen (22, 23) an eine Differenzbildungsstufe (24) angeschlossen sind, die ein für die Laufzeit repräsentatives Signal liefert.

3. Vorrichtung nach Anspruch 1 oder 2, dadurch gekennzeichnet, dass der Messempfänger (15) und der Referenzempfänger (16) durch von einer Zeitsteuerschaltung (25) im Gegentakt für jeweils den Messzeitraum (T1) bzw. den Referenzzeitraum (T2) schliessbare Schalter (26, 27) wahlweise in die Rückkopplungsschleife (12) einschaltbar sind.

4. Vorrichtung nach Anspruch 2 und 3, dadurch gekennzeichnet, dass die Zähler (20, 21) durch von der Zeitsteuerschaltung (25) im Gegentakt für jeweils den Messzeitraum (T1) bzw. den Referenzzeitraum (T2) schliessbare Schalter (28, 29) wahlweise an den Ausgang des Impulsgenerators (11) anschliessbar sind.

5. Vorrichtung nach einem der vorhergehenden Ansprüche, dadurch gekennzeichnet, dass der Impulsgenerator (11) aus einem Impulspausengeber (30) und einem Sendeimpulsgeber (31) besteht, welche vorzugsweise hintereinandergeschaltet sind, wobei der Impulspausengeber (30) von einem Eingangsimpuls triggerbar ist und der Sendeimpulsgeber (31) am Ende der vom Impulspausengeber (30) gegebenen Impulspause ausgelöst wird.

6. Vorrichung nach einem der vorhergehenden Ansprüche, dadurch gekennzeichnet, dass zwischen den Impulsgenerator (11) und den Sender (32) ein Sendeimpulsformer (33) geschaltet ist, der einen Impuls mit deutlicher Spitze bildet.

7. Vorrichtung nach einem der vorhergehenden Ansprüche, dadurch gekennzeichnet, dass die beiden an den Messempfänger (15) bzw. Referenzempfänger (16) angeschlossenen Schalter (26 bzw. 27) gemeinsam an einen Verstärker (34) angelegt sind, der zum Impulsgenerator (11) führt.

8. Vorrichtung nach Anspruch 7, dadurch gekennzeichnet, dass dem Verstärker (34) ein Amplitudenregler (35) folgt.

9. Vorrichtung nach einem der Ansprüche 3 bis 8, dadurch gekennzeichnet, dass in den Zweig zwischen den beiden an den Messempfänger (15) bzw. den Referenzempfänger (16) angeschlossenen Schaltern (26 bzw. 27) und den Eingang (18) des Impulsgenerators (11) eine Differenzierstufe (36) eingeschaltet ist.

10. Vorrichtung nach Anspruch 9, dadurch gekennzeichnet, dass an die Differenzierstufe (36) ein Nulldurchgangskomparator (37) angelegt ist.

11. Vorrichtung nach einem der Ansprüche 3 bis 10, dadurch gekennzeichnet, dass in den Zweig zwischen den beiden an den Messempfänger (15) bzw. den Referenzempfänger (16) angeschlossenen Schaltern (26 bzw. 27) und den Eingang (18) des Impulsgenerators (11) ein normalerweise geschlossenes Tor (38) eingeschaltet ist, welches von einer Torsteuerschaltung (39) beim Erscheinen der Endflanke jedes Sendeimpulses am Ausgang (17) des Impulsgenrators (11) geöffnet und beim Erscheinen eines Empfangsimpulses am Ausgang des Tores (38) wieder schliesst, wozu der Setzeingang (S) der Torsteuerschaltung (39) an den Ausgang (17) des Impulsgenerators (11) und der Rücksetzeingang (R) an den Ausgang des Tores (38) angeschlossen ist.

12. Vorrichtung nach einem der vorhergehenden Ansprüche, dadurch gekennzeichnet, dass unmittelbar vor dem Impulsgenerator (11) in die Rückkopplungsschleife (12) ein ODER-Gatter (40) eingeschaltet ist, dessen zweiter Eingang zum Empfang eines Start-Stopp-Signales an die Zeitsteuerschaltung (25) angeschlossen ist.

13. Vorrichtung nach einem der Ansprüche 1, 2 und 4 bis 12, dadurch gekennzeichnet, dass statt der ersten beiden elektrischen Schalter (26, 27) nur ein gemeinsamer Mess-Referenzempfänger (15, 16) in relativ geringem Abstand vom Sender (32) angeordnet ist und eine von der Zeitsteuerschaltung (25) gesteuert in die Referenzstrecke (14) bringbare optische Ablenkvorrichtung (50) das Licht über die Messstrecke (13) zum Mess-Referenzempfänger (15, 16) lenkt, wenn sie in die Referenzstrecke (14) gebracht ist.

14. Vorrichtung nach einem der vorhergehenden Ansprüche, dadurch gekennzeichnet, dass die Mess- und Referenzzeiträume konstant sind und die Impulse gezählt werden.

15. Vorrichtung nach einem der Ansprüche 1 bis 13, dadurch gekennzeichnet, dass die Impulszahlen konstant sind und die Mess- und Referenzzeiträume gemessen werden.

## Revendications

1. Dispositif pour la mesure du temps de parcours d'ondes électromagnétiques, en particulier d'ondes lumineuses, sur une section de mesure de longueur prédéterminée, comportant un émetteur (32) commandé par un générateur (11) d'impulsions électriques, lequel émetteur envoie sur la section de mesure les ondes électriques sous la forme d'impulsions d'ondes, et un récepteur (15) de mesure prévu à l'extrémité de la section de mesure, qui capte les impulsions d'ondes et les convertit en une impulsion électrique de réception, ainsi qu'un étage calculateur-compteur électronique pour la détermination du temps de parcours des impulsions, caractérisé en ce qu'il est prévu une boucle (12) de réaction s'étendant entre la sortie (17) et l'entrée (18) de déclenchement du générateur (11) d'impulsions pouvant être déclenché par des impulsions, boucle dans laquelle peut être intégrée en symétrie, soit la section (13) de mesure, soit une section (14) de référence présentant, à l'extrémité, un récepteur (16) de référence, pendant un intervalle de temps de mesure (T1) ou, respectivement, un intervalle de temps de référence (T2), lesquels intervalles sont tous deux grands par rapport à la période des impulsions, et en ce que le générateur d'impulsions attaque en outre l'étage calculateur-compteur (19) qui calcule le temps de parcours d'après la longueur de l'intervalle de temps de mesure ou de référence et le nombre d'impulsions délivrées pendant ce temps.

2. Dispositif selon la revendication 1, caractérisé en ce que l'étage calculateur-compteur (19) présente deux compteurs (20 et 21) pouvant être connectés respectivement à la sortie du générateur (11) d'impulsions pendant l'intervalle de temps de mesure (T1) et l'intervalle de temps de référence (T2), respectivement, compteurs auxquels sont connectés les étages diviseurs (22, 23 respectivement) dans lesquels, après la fin de l'intervalle de temps de mesure (61) ou de l'intervalle de temps de référence (T2), le quotient de l'intervalle de temps de mesure (T1) ou de l'intervalle de temps de référence (T2) et du nombre d'impulsions comptées pendant cet intervalle de temps de mesure est effectué, et en ce que les étages diviseurs (22, 23) sont connectés à un étage soustracteur (24) qui produit un signal représentatif du temps de parcours.

3. Dispositif selon la revendication 1 ou 2, caractérisé en ce que le récepteur (15) de mesure et le récepteur (16) de référence peuvent être mis en circuit sélectivement dans la boucle (12) de réaction au moyen d'interrupteurs (26, 27) pouvant être fermés par un circuit (25) de synchronisation, en symétrie, pour chacun, respectivement, des intervalles de temps de mesure (T1) et de référence (T2).

4. Dispositif selon les revendications 2 et 3, caractérisé en ce que les compteurs (20, 21) peuvent être connectés sélectivement à la sortie du générateur (11) d'impulsions au moyen d'interrupteurs (28, 29) pouvant être fermés par le circuit (25) de synchronisation, en symétrie, pour chacun, respectivement, des intervalles de temps de mesure (T1) et de référence (T2).

5. Dispositif selon l'une des revendications précédentes, caractérisé en ce que le générateur (11) d'impulsions est constitué d'un générateur (30) d'intervalles d'impulsions et d'un générateur (31) d'impulsions d'émisson qui sont de préférence montés en série, le générateur (30) d'intervalles d'impulsions pouvant être déclenché par une impulsion d'entrée et le générateur (31) d'impulsions d'émission étant déclenché à la fin de l'intervalle d'impulsions produit par le générateur (30) d'intervalles d'impulsions.

6. Dispositif selon l'une des revendications précédentes, caractérisé en ce qu'il est inséré, entre le générateur (11) d'impulsions et l'émetteur (32), un conformateur (33) d'impulsions d'émisson qui forme une impulsion ayant un pic distinct.

7. Dispositif selon l'une des revendications précédentes, caractérisé en ce que les deux interrupteurs (26 et 27) connectés au récepteur (15) de mesure et au récepteur (16) de référence, respectivement, sont raccordés en commun à un amplificateur (34) qui mène au générateur (11) d'impulsion.

8. Dispositif selon la revendication 7, caractérisé en ce qu'un régulateur (35) d'amplitude suit l'amplificateur (34).

9. Dispositif selon l'une des revendications 3 à 8, caractérisé en ce qu'un étage (36) de soustraction est inséré dans la branche entre les deux interrupteurs (26 et 27), connectés respectivement au récepteur (15) de mesure et au récepteur (16) de référence, et l'entrée (18) du générateur (11) d'impulsions.

10. Dispositif selon la revendication 9, caractérisé en ce qu'un comparateur (37) de passage par zéro est relié à l'étage (36) de soustraction.

11. Dispositif selon l'une des revendications 3 à 10, caractérisé en ce qu'une porte (38) normalement fermée est insérée dans la branche entre les deux interrupteurs (26 et 27), connectés respectivement au récepteur (15) de mesure et au récepteur (16) de référence, et l'entrée (18) du générateur (11) d'impulsions, laquelle porte est ouverte par un circuit (39) de commande de porte à l'apparition du flanc terminal de chaque impulsion d'émission à la sortie (17) du générateur (11) d'impulsions et est refermée à l'apparition d'une impulsion de réception à la sortie de la porte (38), l'entrée (S) de positionnement du circuit (39) de commande de porte étant à cet effet connectée à la sortie (17) du générateur (11) d'impulsions et l'entrée (R) de remise à l'état initial étant connectée à la sortie de la porte (38).

12. Dispositif selon l'une des revendications précédentes, caractérisé en ce qu'il est inséré directement devant le générateur (11) d'impulsions, dans la boucle (12) de réaction, une porte OU (40) dont la seconde entrée est connectée au circuit (25) de synchronisation pour la réception d'un signal de départ-arrêt.

13. Dispositif selon les revendications 1, 2 et 4 à 12, caractérisé en ce qu'à la place des deux premiers interrupteurs électriques (26, 27), seul un récepteur commun (15, 16) de mesure-référence est disposé à une distance relativement faible de l'émetteur (32) et un dispositif (50) de déviation optique, pouvant être amené dans la section (14) de référence sous la commande du circuit (25) de synchronisation, dévie la lumière par la section (13) de mesure sur le récepteur de mesure-référence (15, 16), lorsque ce dispositif est amené dans la section (14) de référence.

14. Dispositif selon l'une des revendications précédentes, caractérisé en ce que les intervalles de temps de mesure et de référence sont constants et les impulsions sont comptées.

15. Dispositif selon l'une des revendications 1 à 13, caractérisé en ce que le compte d'impulsions est constant et les intervalles de temps de mesure et de référence sont mesurés.

**Claims**

1. Apparatus for measuring the transit time of electromagnetic waves, in particular light waves, over a measurement path of predetermined length, the apparatus comprising a transmitter (32) energised by an electrical pulse generator (11) which transmits the electrical wave in the form of wave pulses along the measurement path; a measurement receiver (15) provided at the end of the measurement path which receives the wave pulses; and also an electronic computing/counting stage for determining the pulse transit time; characterised in that a feedback loop (12) is provided which extends between the output (17) and the trigger input (18) of the pulse generator (11) which is triggerable by pulses, with either the measurement path (13) or a reference path (14) having a reference receiver (16) at the end being alternatively includable in the feedback loop during a measurement time period (T1) and a reference time period (T2) respectively, which are both large relative to the pulse period: and in that the pulse generator also acts on a computing/counting stage (19) which computes the transit time from the length of the measurement time period and the reference time period and from the number of pulses transmitted during the same.

2. Apparatus in accordance with claim 1, characterised in that the computing/counting stage (19) has two counters (20 and 21, respectively) which are connectable to the output of the pulse generator (11) during the measurement period (T1) and the reference period (T2) respectively; the two counters being followed by dividing stages (22 and 23 respectively) in which, after termination of the measurement period (T1) and of the reference period (T2) respectively, the respective quotient of the measurement period (T1) and the reference period (T2) and the number of pulses counted during these time periods are formed; and in that the dividing stages (22, 23) are connected to a difference forming stage (24) which delivers a signal representative of the transit time.

3. Apparatus in accordance with claim 1 or claim 2, characterised in that the measurement receiver (15) and the reference receiver (16) can be selectively and alternatively connected into the feedback loop (12) via switches (26, 27) which can be closed by a time control circuit (25) for the measurement period (T1) and the reference period (T2) respectively.

4. Apparatus in accordance with claim 2 and claim 3, characterised in that the counters (20, 21) are selectively and alternatively connectable to the output of the pulse generator (11) via switches (28, 29) which can be closed by the time control circuit (25) for the measurement time period (T1) and the reference time period (T2) respectively.

5. Apparatus in accordance with one of the preceding claims, characterised in that the pulse generator (11) consists of a pulse pause generator (30) and a transmitted pulse generator (31) which are preferably connected in series, with the pulse pause generator (30) being triggerable by an input pulse and the transmitted pulse generator (31) being triggered at the end of the pulse pause generated by the pulse pause generator (30).

6. Apparatus in accordance with one of the preceding claims, characterised in that a transmitted pulse shaper (33) which forms a pulse with a clear peak is inserted between the pulse generator (11) and the transmitter (32).

7. Apparatus in accordance with one of the preceding claims, characterised in that the two switches (26, 27) which are connected to the measurement receiver (15) and to the reference receiver (16) respectively are jointly applied to an amplifier (34) which leads to the pulse generator (11).

8. Apparatus in accordance with claim 7, characterised in that an amplitude regulator (35) follows the amplifier (34).

9. Apparatus in accordance with one of the preceding claims 3 to 9, characterised in that a differentiation stage (36) is inserted into the branch between the two switches (26 and 27), which are respectively connected to the measurement receiver (15) and to the reference receiver (16), and the input (18) of the pulse generator (11).

10. Apparatus in accordance with claim 9, characterised in that a zero passage comparator (37) is connected to the differentiation stage (36).

11. Apparatus in accordance with one of the preceding claims, characterised in that a normally closed gate (38) is inserted into the branch between the two switches (26 and 27), which are respectively connected to the measurement receiver (15) and to the reference receiver (16), and the input (18) of the pulse generator (11); in that the gate (38) is opened by a gate control circuit (39) on the appearance of the end flank (trailing flank) of each transmitted pulse at the output (17) of the pulse generator (11) and closes again on the appearance of a received pulse at the output of the gate (38), for which purpose the set input (S) of the gate control circuit (39) is connected to the output (17) of the pulse generator (11) and the reset input (R) is connected to the output of the gate (38).

12. Apparatus in accordance with one of the preceding claims, characterised in that an OR gate (40) is inserted into the feedback loop (12) directly in front of the pulse generator (11), with the second input of the gate (40) being connected to the time control circuit (25) to receive a start-stop signal.

13. Apparatus in accordance with one of the claims 1, 2 and 4 to 12, characterised in that in place of the first two electrical switches (26, 27) only a common measurement-reference receiver (15, 16) is arranged at a relatively small distance from the transmitter (32); and in that an optical deflecting device (50), which can be inserted in controlled manner into the reference path (14) by the time control circuit (25), deflects the light via the measurement path (13) to the measurement-reference receiver (15, 16) when brought into the reference path (14).

14. Apparatus in accordance with one of the preceding claims, characterised in that the measurement and reference time periods are constant and the pulses are counted.

15. Apparatus in accordance with one of the claims 1 to 13, characterised in that the pulse counts are constant and the measurement and reference time periods are measured.

FIG.1

# FIG.2